# EUROPÄISCHE PATENTANMELDUNG

(11) **EP 4 488 412 A1**
(43) Veröffentlichungstag der Anmeldung: **08.01.2025**
(21) Anmeldenummer: 23020323.4
(22) Anmeldetag: 03.07.2023
(51) Int. Cl.: C25B 1/04, C25B 15/029, C25B 15/08

(54) **VERFAHREN ZUM BETREIBEN EINER ELEKTROLYSEANLAGE UND ELEKTROLYSEANLAGE**

(71) Anmelder: Linde GmbH, 82049 Pullach (DE)
(72) Erfinder: Winkler, Florian, 82049 Pullach (DE); Stoffregen, Torsten, 82049 Pullach (DE); Gaube, Gerald, 82049 Pullach (DE); Meusel, Ronald, 82049 Pullach (DE); Chromik, Karsten, 82049 Pullach (DE); Dietzen, Markus, 82049 Pullach (DE); Kunze, Eckehardt, 82049 Pullach (DE); Schulze, Wolfram, 82049 Pullach (DE); Werner, Thorsten-Bernd, 82049 Pullach (DE)
(74) Vertreter: Imhof, Dietmar

(57) **Zusammenfassung**

Die Erfindung betrifft ein Verfahren zum Betreiben einer Elektrolyseanlage (100), in der Wasser in einer Elektrolyseeinheit (110) in Sauerstoff und Wasserstoff umgesetzt wird, wobei ein prozessierter Fluidstrom (c) von einer Sauerstoffseite (114) der Elektrolyseeinheit zu einem Gas-Abscheider (120) geführt wird, wobei der prozessierte Fluidstrom (c) Wasser und Gas aufweist, wobei ein sauerstoffhaltiger Fluidstrom (g, h) von dem Gas-Abscheider (120) abgeführt wird, wobei der sauerstoffhaltiger Fluidstrom Gas aufweist, wobei der sauerstoffhaltige Fluidstrom (h, d) einem Sauerstoffbereich der Elektrolyseanlage (100) zugeführt wird, und wobei, bei Bedarf, dem sauerstoffhaltigen Fluidstrom (h) an einer Zuführstelle (140) vor der Zufuhr zum Sauerstoffbereich der Elektrolyseanlage (100) Umgebungsluft (k) zugeführt wird oder der sauerstoffhaltige Fluidstrom (h) vor der Zufuhr zum Sauerstoffbereich der Elektrolyseanlage (100) durch Umgebungsluft (k) ersetzt wird. Die Erfindung betrifft auch eine entsprechende Elektrolyseanlage (100).

## Beschreibung

Die Erfindung betrifft ein Verfahren zum Betreiben einer Elektrolyseanlage zur Wasserelektrolyse, sowie eine solche Elektrolyseanlage, die z.B. zur Gewinnung von Wasserstoff eingesetzt wird.

### Stand der Technik

Zur Gewinnung von Wasserstoff kann die sog. Elektrolyse eingesetzt werden, bei der z.B. Wasser durch elektrische Energie in Sauerstoff und Wasserstoff aufgespaltet bzw. umgesetzt wird. Hierbei wird auch von der Wasser-Elektrolyse gesprochen. Hier kommt z.B. die sog. Protonen-Austausch-Membran-Elektrolyse (PEM-Elektrolyse, "Proton Exchange Membrane"-Elektrolyse) in Betracht. In diesem Zusammenhang ist auch von PEM-Elektrolyseanlagen oder PEM-Elektrolyseuren die Rede.

Ein Großteil des Wassers verbleibt bei der PEM-Elektrolyse in der Regel auf der Sauerstoffseite der Membran. Während der Wasserstoff auf der anderen Seite der Membran erzeugt und abgeführt wird, verbleibt der Sauerstoff zunächst im Wasser und wird danach typischerweise in einem Behälter aus dem Wasser abgeschieden. Der Druck an der Kathode (Wasserstoffseite bzw. Wasserstoffbildung) liegt hier typischerweise bei über 20 barg. An der Anode (Sauerstoffseite bzw. Wasseraufspaltung) liegt der Druck des Sauerstoffproduktes hingegen unterhalb des Druckes auf der Kathodenseite, z.B. leicht über Atomsphärendruck.

Es kann jedoch vorkommen, dass auch Wasserstoff zu einem gewissen Teil auf die Sauerstoffseite zurück diffundiert oder anderweitig, z.B. aufgrund Defekten oder Rissen in der Membran, dorthin gelangt. Es kann ein explosives Gemisch entstehen, das sich unter Umständen entzünden und durch die entstehende Explosion die Elektrolyseanlage beschädigen kann. Vor diesem Hintergrund stellt sich die Aufgabe, eine Elektrolyseanlage bzw. deren Betrieb sicherer zu machen.

Durch den Druckunterschied zwischen den Elektroden kann es zu einem konstanten Wasserstoffübergang (sog. "cross over") durch die Membran kommen. Dadurch kann es in bestimmten Betriebsszenarien (z.B. Teillast, Anfahren, Abfahren, Stillstand einzelner Elektrolysezellen bzw. sog. Stacks) zu einer Wasserstoffansammlung auf der Sauerstoffseite der Elektrolyse kommen, während die Elektrolyseeinheiten in Betrieb sind.

Eine Wasserstoff-Leckage durch Membran-Perforation von der Kathodenseite mit z.B. mehr 20 barg auf die Anodenseite kann auch als Folge unerkannter Membran-Defekte auftreten, während die Elektrolysezellen in Betrieb sind. Ein Membran-Riss kann zu einem schlagartigem Übergang größerer Mengen an Wasserstoff von der Kathodenseite auf die Anodenseite führen.

All diese Szenarien führen zu einem Explosionsrisiko. Die sog. untere Entzündungsgrenze (UEG, oder untere Explosionsgrenze LEL, "lower explosive limit") von Wasserstoff liegt bei ca. 4 Vol.%. Ab 50% des UEG (2 Vol.% Wasserstoff) muss die Elektrolyseanlage in der Regel abgeschaltet und in einen sicheren Zustand überführt werden.

Aus der EP 3 971 324 A1 ist z.B. eine Elektrolyseanlage bekannt, bei der Inertgas in den Sauerstoffproduktstrom eingebunden wird, um die Wasserstoffkonzentration zu reduzieren.

Vor diesem Hintergrund stellt sich die Aufgabe, eine bessere Möglichkeit anzugeben, bei der Wasser-Elektrolyse, z.B. der PEM-Elektrolyse, das Explosionsrisiko zu senken und so den Betrieb der Elektrolyseanlage zu verbessern.

### Offenbarung der Erfindung

Diese Aufgabe wird durch ein Verfahren zum Betreiben einer Elektrolyseanlage sowie eine Elektrolyseanlage mit den Merkmalen der unabhängigen Patentansprüche gelöst. Ausgestaltungen sind Gegenstand der abhängigen Patentansprüche sowie der nachfolgenden Beschreibung.

### Vorteile der Erfindung

Die Erfindung beschäftigt sich mit der Wasser-Elektrolyse sowie Elektrolyseanlagen bzw. deren Betrieb hierfür. Solche Elektrolyseanlagen dienen typischerweise dem Erzeugen oder Gewinnen von Wasserstoff mittels Elektrolyse. Bei der sog. Wasser-Elektrolyse wird Wasser in Wasserstoff und Sauerstoff umgesetzt (gespalten), d.h. neben Wasserstoff wird also zugleich auch immer Sauerstoff gewonnen bzw. erzeugt. Bei der Wasser-Elektrolyse gibt es z.B. die sog. alkalische Wasser-Elektrolyse (AEL, "Alkaline Electrolysis") oder die sog. Protonen-Austausch-Membran-Elektrolyse (PEM-Elektrolyse, "Proton Exchange Membrane"-Elektrolyse). Die Grundlagen hierzu sind an sich bekannt, z.B. aus " Bessarabov et al: PEM electrolysis for Hydrogen production. CRC Press."

Daneben gibt es auch sog. Festoxid-Elektrolyseurzellen (SOEC, "Solid Oxide Electrolysis Cell") und die Anionen-Austausch-Membran-Elektrolyse (AEM-Elektrolyse, "Anion Exchange Membrane"-Elektrolyse). Insbesondere diejenigen Elektrolyse-Technologien, die bei niedrigen Temperaturen erfolgen, also z.B. die PEM-, AEL- und AEM-Elektrolyse, eignen sich aufgrund der Möglichkeiten eines flexiblen Betriebs zur Unterstützung des Übergangs der Energiegewinnung hin zu erneuerbaren Energien.

Bei der PEM-Elektrolyse z.B. wird Wasser, und zwar insbesondere demineralisiertes Wasser, als Einsatzmedium einer Elektrolyseeinheit mit einer Protonen-Austausch-Membran (PEM) zugeführt, in der das Einsatzmedium, also das Wasser, in Wasserstoff und Sauerstoff umgesetzt (gespalten) wird.

Ein Großteil des Wassers verbleibt bei der PEM-Elektrolyse, wie erwähnt, in der Regel auf der Sauerstoffseite der Membran. Während der Wasserstoff auf der anderen Seite der Membran erzeugt und abgeführt wird, verbleibt der Sauerstoff zunächst im Wasser und wird danach typischerweise, als prozessierter Fluidstrom, einem Behälter (der als Gas- bzw. Sauerstoff-Abscheider verwendet wird) zugeführt. Dort wird der Sauerstoff aus dem Wasser abgeschieden, es wird ein sauerstoffhaltiger Fluidstrom oder ein sog. Sauerstoffproduktstrom erhalten.

Es kann jedoch vorkommen, dass auch Wasserstoff zu einem gewissen Teil auf die Sauerstoffseite zurück diffundiert oder anderweitig, z.B. aufgrund Defekten oder Rissen in der Membran, dorthin gelangt, wie eingangs erläutert. Der von der Sauerstoffseite abzuführende Fluidstrom (prozessierter Fluidstrom) weist damit nicht nur Wasser und Sauerstoff, sondern ggf. auch Wasserstoff auf, allgemein also Wasser und Gas; unter dem Begriff Gas soll hier allgemein gasförmiges Medium, nicht nur ein einzelnes Gas, sondern auch ein ggf. vorhandenes Gasgemisch verstanden werden. Auf der Sauerstoffseite der Elektrolyseeinheit bzw. im Fluidstrom kann also ein explosives Gemisch entstehen, das sich unter Umständen irgendwo in der Elektrolyseanlage stromabwärts der Elektrolyseeinheit entzünden kann, sei es im Fluidstrom zum Sauerstoff- bzw. Gas-Abscheider oder danach im dort abgeschiedenen und abgeführten Gasstrom (es wird dann eben nicht nur der Sauerstoff, sondern auch der ggf. vorhandene Wasserstoff abgeschieden). Durch die entstehende Explosion bzw. Detonation kann die Elektrolyseanlage beschädigt werden.

Eine Entzündung des Gemisches kann insbesondere dann auftreten, wenn ein Anteil an Wasserstoff im Gas (der Wasseranteil ist hierbei nicht relevant) einen gewissen vorgegebenen Anteil, die sog. untere Explosionsgrenze (LEL, "lower explosive limit") überschreitet; dieses liegt z.B. ei einem Standby-Betrieb oder Betrieb der Elektrolyseanlage mit geringer Last typischerweise bei ca. 4%. Die (untere) Explosionsgrenze eines Gases gibt den Gehalt in einem Gasgemisch an, ab dem eine Entzündung bzw. Explosion bei zugleich ausreichendem Sauerstoffgehalt möglich ist.

Da eine Zündquelle in der Elektrolyseeinheit oder irgendwo stromabwärts in aller Regel nicht ausgeschlossen oder vermieden werden kann, muss mit einer potentiellen Entzündung bzw. Explosion oder Detonation beim Betrieb einer Elektrolyseanlage immer gerechnet werden. Bei einer Explosion handelt es sich um einen unkontrollierten Abbrand eines zündfähigen Gasgemischs mit laminarer Flammenfront. Eine Explosion unterscheidet sich von einer Detonation im Wesentlichen durch die Geschwindigkeit der Ausbreitung.

Die Reaktion zwischen Wasserstoff und Sauerstoff läuft sehr schnell ab und erzeugt sehr hohe Flammengeschwindigkeiten, d.h. hohe Geschwindigkeiten, mit denen sich die Flammen z.B. in entsprechenden Fluidverbindungen oder Fluidleitungen ausbreiten. Bei einer Explosion liegt diese unterhalb, bei einer Detonation typischerweise oberhalb der Schallgeschwindigkeit. Durch Explosionen und Detonationen von Gasen bzw. Gasgemischen kommt es zu einem massiven Druckanstieg. Typischerweise kann bei einer Explosion eines Wasserstoff-Sauerstoff - Gemisches mit einer Druckerhöhung um den Faktor Zehn gerechnet werden. Die Auswirkungen einer Detonation sind deutlich schwerwiegender und weniger genau vorhersagbar. Hier kann der Druckanstiegsfaktor 25 oder auch 50 und mehr betragen, dies ist abhängig von der Geometrie, Turbulenz und weiteren Faktoren. Eine Explosion kann nach einer bestimmten Anlauflänge und einer Mindestkonzentration an Brennstoff und Sauerstoff in eine Detonation umschlagen. Es können also Drücke entstehen, die teils das 25-fache, 50-fache und mehr des eigentlichen Betriebsdrucks in der Elektrolyseanlage, dort insbesondere der Sauerstoffseite und dem Verlauf stromabwärts, ggf. auch stromaufwärts, betragen.

Um also etwaige Schäden an der Elektrolyseanlage zu vermeiden, können die betreffenden Fluid- oder Gasleitungen für entsprechend hohe Drücke ausgelegt und die Eignung durch Tests nachgewiesen werden. Je nach Elektrolyseanlage und Verwendung des Sauerstoffs, können hierbei sehr viele oder lange Leitungen betroffen sein. Dies betrifft nicht nur die Fluidleitungen von der Elektrolyseeinheit zum Gas-Abscheider, sondern auch etwaige Gasleitungen, in denen der abgeschiedene Sauerstoff (und ggf. Wasserstoff) zu einer oder mehreren gewünschten Verwendungen oder sonstigen Verarbeitungsschritten geführt wird. Dies kann zu besonders hohen Kosten führen.

Unabhängig davon ist, wie erwähnt, in der Regel vorgesehen, die Elektrolyseanlage abzuschalten, wenn der Wasserstoffanteil einen gewissen Wert, z.B. 2 Vol. %, erreicht, um etwaige Explosionen oder Detonationen zu verhindern.

Vor diesem Hintergrund wird nun vorgeschlagen, bei einer Elektrolyseanlage wie vorstehend beschrieben, in den sauerstoffhaltigen Fluidstrom - der wie erwähnt nicht nur Sauerstoff sondern eben auch einen gewissen Anteil an Wasserstoff enthalten kann - wieder dem Sauerstoffbereich der Elektrolyseanlage, also z.B. dem prozessierten Fluidstrom und/oder dem Gas-Abscheider, zuzuführen. Hierzu kann z.B. ein Gebläse verwendet werden.

Zudem wird vorgeschlagen, bei Bedarf, vor der Zufuhr des sauerstoffhaltigen Fluidstroms zum Sauerstoffbereich der Elektrolyseanlage, Umgebungsluft zuzuführen. Die Zufuhr der Umgebungsluft kann an einer geeigneten Zuführstelle erfolgen, insbesondere vor dem Gebläse. Es wird also ein Rezirkulationskreis erzeugt, der zur Umgebung offen ist bzw. bei Bedarf zur Umgebung geöffnet werden kann, sodass Umgebungsluft einströmen kann.

Dabei kann insbesondere die Wasserstoff-Konzentration überwacht werden, und zwar einerseits z.B. kontinuierlich oder quasi-kontinuierlich, und andererseits z.B. analytisch. Hierzu kann z.B. eine geeignete Sicherheitseinrichtung mit Messeinrichtung oder Sensor vorgesehen sein. Die Wasserstoff-Konzentration kann z.B. im prozessierten Fluidstrom, und zwar bevorzugt nach der Zuführstelle und vor der Zufuhr zum Sauerstoffbereich Elektrolyseanlage, überwacht werden.

Wenn bei der Überwachung festgestellt wird, dass die Wasserstoff-Konzentration einen vorgegebenen Schwellwert, z.B. die schon erwähnten 2 Vol-%, übersteigt, kann wenigstens eine Sicherheitsmaßnahme eingeleitet werden; dies kann z.B. ebenfalls durch die Sicherheitseinrichtung erfolgen. Dies kann insbesondere das Abschalten der Elektrolyseeinheit bzw. der einzelnen Elektrolysezellen umfassen, ebenso das Unterbrechen des prozessierten Fluidstroms von der Sauerstoffseite der Elektrolyseeinheit zu dem Gas-Abscheider und damit auch zum Rezirkulationskreis. Besonders bevorzugt ist als Sicherheitsmaßnahme vorgesehen, dass die Zufuhr der Umgebungsluft in den sauerstoffhaltigen Fluidstrom erfolgt. Hierzu kann also der Rezirkulationskreis, z.B. mittels eines Ventils, geöffnet werden.

Auf diese Weise bzw. mit Hilfe dieser Konfiguration kann zu jedem Zeitpunkt ein Anstieg der Wasserstoff-Konzentration im Sauerstoffteil der Elektrolyse auf über UEG (4 Vol-%) verhindert werden. Geltende Normen und Vorschriften zum sicheren Betrieb einer Wasserstoffanlage können damit eingehalten werden, die Bildung einer explosionsfähigen Atmosphäre wird verhindert.

Durch die Öffnung des Rezirkulationskreis für einen Zustrom von atmosphärischer Luft zum Sauerstoffproduktstrom muss also kein Inertgas-Strom in den Sauerstoffproduktstrom eingebunden werden. Vielmehr kann besonders einfach und kostengünstig atmosphärische Luft über eine Schaltarmatur in den Rezirkulationskreis eingebunden werden

Mit Hilfe der Öffnung des Sauerstoffproduktstroms zur atmosphärischen Luft kann die Wasserstoffkonzentration wirksam auf ein Niveau unterhalb der unteren Explosionsgrenze (UEG) von 4% begrenzt werden, d.h. der Rezirkulationskreis sorgt in der vorgeschlagenen Konfiguration lediglich dafür, das ausreichend Reaktionszeit geschaffen wird, um einen Anstieg der Wasserstoffkonzentration im Sauerstoffteil der Elektrolyse oder PEM-Elektrolyse auf über die UEG (4 Vol-%) zu verhindern und ggf. eine Abschaltung der Elektrolyseeinheit bei z.B. 50% des UEG (2 Vol.-% Wasserstoff) sicherzustellen.

In Ausführungsformen kann der (analytisch überwachte) Sauerstoffproduktstrom (bzw. der sauerstoffhaltige Fluidstrom) am Austritt der Elektrolysezellen anodenseitig an unterschiedlichen Positionen wieder in das Sauerstoffsystem bzw. in den Sauerstoffbereich eingebunden werden. So kann der Sauerstoffproduktstrom z.B. in eine Sammelleitung, die unterschiedliche Elektrolysezellen oder Elektrolyseeinheiten verbindet, zurückgeführt werden. Dabei können für alle Funktionselemente innerhalb des Rezirkulationskreises die erhöhten Anforderungen an die technische Ausführung, die aus einem Explosionsrisiko resultieren, reduziert werden. Ebenso denkbar ist die Einbindung des Sauerstoffproduktstroms (bzw. des sauerstoffhaltigen Fluidstrom) direkt in den Gas-Abscheider (eine sog. Sauerstoff-Wasser-Phasenseparator).

Es hat sich gezeigt, dass mit der vorgeschlagenen Konfiguration die Wasserstoffkonzentrationen an unterschiedlichen Positionen innerhalb des Rezirkulationskreises, der z.B. über die gemeinsame Sammelleitung mit dem Gas-Abscheider verbunden ist, die UEG nicht überschreitet. Zunächst stellt sich innerhalb des Rezirkulationskreises als Ergebnis des Lastzustandes der Elektrolyseure und damit aufgrund des erwähnten "Crossovers" eine Wasserstoff-Konzentration, von z.B. 1% Wasserstoff im rezirkulierenden Sauerstoffstrom ein. Wird ein Membranversagen an einem Stack unterstellt, wird die damit verbundene zusätzliche Wasserstoff-Menge in kurzer Zeit in den Rezirkulationsstrom eingebracht und reichert dann als konstanter Wasserstoffstrom das Sauerstoff-System kontinuierlich an. Im Ergebnis führt das Membranversagen zu einem Übergang von Wasserstoff von der Kathodenseite auf die Anodenseite der PEM und damit ins Sauerstoffsystem, typischerweise mit einem steilen Anstieg der Wasserstoffkonzentration. Dieser Anstieg kann durch einen besonderes schnell reagierenden Wasserstoff-Analysator (z.B. einen kontinuierlichen Laser, oder Spektralanalyse) zum Zeitpunkt bereits bei einer Zeit von 10s nach dem Membranversagen identifiziert werden.

So kann innerhalb weniger Sekunden, z.B. nach 10 s ein Membrandefekt und ein damit verbundener Anstieg der Wasserstoff-Konzentration im Sauerstoffsystem sicher detektiert werden. Durch geeignete Maßnahmen, nämlich durch Öffnung des Loops (Kreislaufs) für eine Frischluftzufuhr wird dann der Anstieg der Wasserstoff-Konzentration im Loop auf unter UEG begrenzt.

Eine sicherheitsgerichtete Schaltung oder allgemein eine Überwachungseinrichtung kann dann das Abschalten der Elektrolysezellen, eine Unterbrechung des Sauerstoffzustromes von den Elektrolysezellen in den Rezirkulationskreis und die Öffnung des Rezirkulationskreises auf der Saugseite des Gebläses für atmosphärische Frischluft einleiten, während das Gebläse z.B. bei konstantem Durchsatz weiter betrieben wird. Durch die Öffnung des Rezirkulationskreises für atmosphärische Luft, auf der Saugseite des Gebläses, wird der Gasstrom aus Wasserstoff und Sauerstoff im Rezirkulationskreis (d.h. der sauerstoffhaltige Fluidstrom) mit atmosphärischer Luft verdünnt oder insbesondere sogar durch atmosphärischer Luft ersetzt und der Anstieg der Wasserstoff-Konzentration sofort begrenzt. Dies ergibt einen steilen Abfall der Wasserstoff-Konzentration an der Detektor-Position im Rezirkulationskreis.

Der Rezirkulationskreis sollte dabei so dimensioniert sein, dass das vorhandene Gasvolumen einen Anstieg der Wasserstoff-Konzentration in der Schleife des Rezirkulationskreises für die Dauer eines Umlaufes auf unter (4 Vol-%) begrenzt.

Anhand einer Analyse bzw. Zusammenfassung aller relevanten Betriebsfälle hat gezeigt, dass die untere Explosionsgrenze (4 Vol-%) für keinen Betriebsfall überschritten wird, d.h. ein Explosionsrisiko für den Rezirkulationskreis kann mit Hilfe der vorgeschlagenen technischen Lösung ausgeschlossen werden.

Außerdem hat sich gezeigt, dass sich die Erhöhung der Wasserstoff-Konzentration im Rezirkulationskreis rechtzeitig, z.B. mindestens 10 s (je nach Anlage) vorher, bemerkbar macht, bevor die Konzentration in dem eigentlichen Sauerstoffproduktstrom die UEG überschreitet. Es bleibt somit ausreichend Zeit für die Sicherheitsmaßnahmen.

Durch die vorgeschlagene Konfiguration kann mit geringem apparativem Aufwand und minimalen Betriebskosten ein explosionstechnisch sicheres System aufgebaut werden, das die Anzahl der ansonsten explosionsdruckfest auszuführenden Ausrüstungen und Rohrleitungsbauteile und dergleichen im Sauerstoff-System der Elektrolyseanlage, z.B. zur PEM-Elektrolyse, deutlich begrenzt und eine Nutzung des Nebenproduktes der PEM Elektrolyse, Sauerstoff, ohne Verschleppung der Explosionsrisiken in nachfolgende Systeme, z.B. Sauerstoff -Verdichtung und/oder Sauerstoff-Reinigung und dergleichen möglich macht.

In einer Ausführungsform weist die Elektrolyseanlage zudem einen Rekombinationsreaktor auf. Der sauerstoffhaltige Fluidstrom wird dann, bevor er dem Sauerstoffbereich der Elektrolyseanlage zugeführt wird, durch den Rekombinationsreaktor geführt bzw. geleitet. Mittels eines Rekombinationsreaktors (oder auch nur als Rekombinator oder als Rekombinationskatalysator bezeichnet) können Wasserstoff und Sauerstoff katalytisch in Wasser umsetzt werden. Auf diese Weise kann die Sicherheit des Rezirkulationskreises weiter erhöht werden. Hierbei kann z.B. eine Temperaturüberwachung der stark exothermen Reaktion z.B. mittels Temperaturelement im Reaktorbett des Rekombinationsreaktors als Ergänzung zu der unter beschriebenen Analyse der Wasserstoffkonzentration herangezogen werden. So können z.B. die Anforderungen an die Sensorik und Aktorik innerhalb des Rezirkulationskreises reduziert werden.

Dabei wirkt die Anordnung des Rekombinationsreaktionsreaktors stromabwärts des Gebläses aufgrund der höheren Temperaturen als Folge der Druckerhöhung begünstigend auf die zu erwartende Wasserstoff-Umsetzung im Rezirkulationsstrom, Um den Rekombinationsreaktionsreaktor vor Kondenswasser zu schützen, ist es zweckmäßig, diesen ca. 10 bis 20K oberhalb des Wassertaupunktes zu betreiben. Somit ist ggf., bei nicht ausreichender Kompressionswärme des Rezirkulators, eine Vorwärmung vor dem Rekombinationsreaktors vorzusehen. Des Weiteren ist es zweckmäßig, das Reinstwasser vor Katalysatorstäuben zu schützen. Somit wird in der nachfolgenden Kühlstrecke des Rekombinators anfallendes Kondensatwasser verworfen oder einer Reinigung zugeführt, sowie geeignete Filter eingesetzt, um das Prozesswasser der Elektrolyse vor Kontamination zu schützen.

Als Rekombinationsreaktionsreaktoren bzw. Rekombinationskatalysatoren eignen sich z.B. Platin- oder Palladium- Katalysatoren oder aber Mischkatalysatoren aus den genannten Edelmetallen, welche z.B. auf keramischen oder metallischen Trägern aufgebracht sind.

In einer Ausführungsform ist zudem vorgesehen, einen Teil des sauerstoffhaltigen Fluidstroms, nach der Zuführstelle und bevor er dem Sauerstoffbereich der Elektrolyseanlage zugeführt wird, zur anderweitigen Verwendung abzuführen. Hierzu kann z.B. eine zusätzliche Schaltarmatur vorgesehen sein. Damit kann eine Nutzung des Nebenproduktes der Elektrolyse, nämlich Sauerstoff, ohne Verschleppung der Explosionsrisiken in nachfolgende Systeme, eine Sauerstoff-Verdichtung oder Sauerstoff-Reinigung ermöglicht werden. Im Falle einer Detektion von Wasserstoff oberhalb des Schwellwertes im Rezirkulationskreis für die Sicherheitsabschaltung kann dann zusätzlich durch Schließen des Verbindungsventils zur Sauerstoffnachbereitung, eine Verunreinigung der nachgeschalteten Sauerstoffaufbereitung durch atmosphärische Luft verhindert werden.

Wenngleich die Erfindung vorwiegend in Bezug auf die PEM-Elektrolyse beschrieben wird, so sei darauf hingewiesen, dass sich die Erfindung für alle Wasser-Elektrolysen eignet, bei denen die Gefahr eines zündfähigen Gemisches aus Wasserstoff und Sauerstoff besteht.

Die Erfindung wird nachfolgend unter Bezugnahme auf die beigefügte Zeichnung näher erläutert, welche eine Anlage gemäß einer bevorzugten Ausführungsform der vorliegenden Erfindung zeigt.

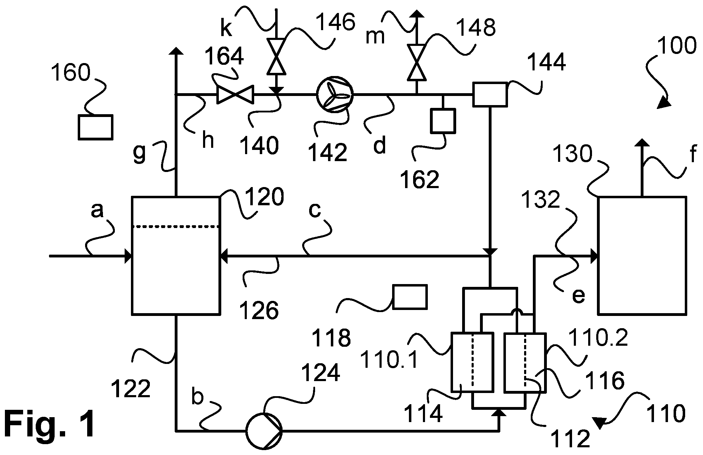

Kurze Beschreibung der Zeichnung
- Figur 1: zeigt schematisch eine erfindungsgemäßen Elektrolyseanlage in einer bevorzugten Ausführungsform.

### Ausführliche Beschreibung der Zeichnung

In Figur 1 ist schematisch eine erfindungsgemäße Elektrolyseanlage 100 in einer bevorzugten Ausführungsform dargestellt, bei der auch ein erfindungsgemäßes Verfahren durchführbar ist. Beispielhaft handelt es sich um eine Elektrolyseanlage zur Wasser-Elektrolyse mittels PEM. Insbesondere handelt sich bei der hier gezeigten sowie allgemein im Rahmen der Erfindung beschriebene Elektrolyseanlage um eine Elektrolyseanlage im industriellen Maßstab, um z.B. Wasserstoff in industriellem Maßstab zu gewinnen. Eine typische Leistung einer solchen Elektrolyseanlage liegt z.B. bei mehr als 10 MW oder auch mehr als 20 MW.

Die Elektrolyseanlage 100 weist eine Elektrolyseeinheit (oder Stack) 110 auf, die hier beispielhaft zwei sog. Elektrolysezellen 110.1, 110.2 aufweist, in denen jeweils eine Protonen-Austausch-Membran (PEM) 112 vorgesehen ist. Die PEM 112 trennt die Elektrolysezellen jeweils in eine Sauerstoffseite 114 und eine Wasserstoffseite 116. Die Sauerstoffseiten 114 und die Wasserstoffseiten 116 können gemeinsam jeweils als Sauerstoffseite bzw. Wasserstoffseite der Elektrolyseeinheit 110 angesehen werden. Weiterhin weist die Elektrolyseanlage 100 eine Energieversorgungseinheit 118 z.B. mit einem oder mehreren Transformatoren und Stromrichtern auf, um die Elektrolyseeinheit 110 bzw. die Elektrolysezellen entsprechend betreiben zu können.

Es sei erwähnt, dass eine Elektrolyseeinheit 110 je nach Größe und Bedarf z.B. auch nur eine oder auch mehr als zwei Elektrolysezellen aufweisen kann, z.B. auch vier, sechs, acht oder mehr Elektrolysezellen. Die Energieversorgungseinheit 118 kann z.B. auch je Elektrolysezelle je einen Transformator und einen Stromrichter aufweisen; ebenso kann z.B. ein Transformator zwei Stromrichtern zugeordnet sein.

Die Elektrolyseanlage 100 weist weiterhin einen Behälter 120 auf, der als Gas-Abscheider, hier insbesondere als Sauerstoff-Abscheider bzw. Sauerstoff-Wasser-Abscheider dient. Der Behälter 120 ist über eine Fluidverbindung mit der Elektrolyseeinheit 110 bzw. dort jeder der Elektrolysezellen 110.1, 110.2 verbunden. Hierdurch kann ein Fluidstrom b aus dem Behälter 120 zur Elektrolyseeinheit gepumpt werden, z.B. mittels einer Pumpe 124, und zwar über eine geeignete Fluidverbindung 122, z.B. Rohre. Je nach Art der Elektrolyseanlage und z.B. der Anzahl der Elektrolysezellen können auch mehrere Fluidverbindungen (d.h. separate Leitungen) vorgesehen sein. Beispielsweise kann z.B. eine Fluidverbindung für zwei oder vier Elektrolysezellen vorgesehen sein.

Die Elektrolyseeinheit 110 ist zudem über eine Fluidverbindung 126, z.B. Rohre, mit dem Behälter 120 verbunden. Durch die Fluidverbindung 126 kann ein Fluidstrom c aus der Elektrolyseeinheit 110, dort der Sauerstoffseite 114 bzw. der Sauerstoffseite einer jeden Elektrolysezelle, zum Behälter 120 gepumpt werden; hierfür kann ebenfalls die Pumpe 124 ausreichend sein. Je nach Art der Elektrolyseanlage und z.B. der Anzahl der Elektrolysezellen können auch hier mehrere Fluidverbindungen (d.h. separate Leitungen) vorgesehen sein. Beispielsweise kann z.B. eine Fluidverbindung für zwei oder vier Elektrolysezellen vorgesehen sein.

Außerdem weist die Elektrolyseanlage 100 einen weiteren Gas-Ascheider 130, hier einen Wasserstoff-Abscheider bzw. Wasserstoff-Wasser-Abscheider auf. Die Elektrolyseeinheit 110 ist dabei über eine Fluidverbindung 128, z.B. Rohre, mit dem Gas-Ascheider 130 verbunden. Durch die Fluidverbindung 128 kann ein Fluidstrom e aus der Elektrolyseeinheit 110, dort der Wasserstoffseite 116 bzw. der Wasserstoffseite einer jeden Elektrolysezelle, zum Gas-Ascheider 130 geführt werden. Je nach Art der Elektrolyseanlage und z.B. der Anzahl der Elektrolysezellen können auch hier mehrere Fluidverbindungen (d.h. separate Leitungen) vorgesehen sein. Beispielsweise kann z.B. eine Fluidverbindung für zwei oder vier Elektrolysezellen vorgesehen sein. Denkbar sind auch mehrere Gas-Abscheider.

Wenngleich hier nur eine Elektrolyseeinheit 110 gezeigt ist, so können auch mehrere davon vorgesehen sein, z.B. je nach Größer und Leistung der Elektrolyseanlage 100. Mehrere Elektrolyseeinheiten können dann z.B. trotzdem an einen gemeinsamen Behälter zur Gas- bzw. Sauerstoff-Abscheidung und/oder einen gemeinsamen Wasserstoff-Abscheider angeschlossen sein. Ebenso können aber weitere Behälter zur Gas- bzw. Sauerstoff-Abscheidung sowie Wasserstoff-Abscheider vorgesehen sein.

Bei einem Betrieb der Elektrolyseanlage 100 wird nun der Fluidstrom b, der Wasser aufweist, vom Behälter 120 zur Elektrolyseeinheit 110 gepumpt. Dort wird das Wasser in Sauerstoff und Wasserstoff umgesetzt. Hierzu wird eine elektrische Spannung an die Elektrolyseeinheit 110 angelegt, der Wasserstoff wird elektrochemisch durch die PEM 112 auf die Wasserstoffseite 116 transportiert und kann von dort, ggf. noch mit Wasserdampf und einer flüssigen Wasserphase vermischt, als Strom e dem Wasserstoff-Abscheider 130 zugeführt werden. Dort kann der Wasserstoff abgeschieden werden und als Strom fz.B. für eine weitere Verwendung abgeführt oder gespeichert werden. Im Wasserstoff-Abscheider 130 abgeschiedene Wasser kann z.B. einer Behandlung zugeführt und dann wieder in den Hauptwasserkreislauf zurückgeführt werden.

Der Sauerstoff verbleibt zusammen mit dem Großteil des Wassers auf der Sauerstoffseite 114. Wie erwähnt, kann auf der Sauerstoffseite 114 aber auch Wasserstoff in gewisser Menge vorhanden sein. Der entstehende Fluidstrom c weist also Wasser und Gas, insbesondere Wasser, Sauerstoff und Wasserstoff, auf. Der Fluidstrom c wird, wie erwähnt, dem Behälter 120 zugeführt.

Da in der Elektrolyseeinheit 110 Wasser in Sauerstoff und Wasserstoff umgesetzt wird und der Sauerstoff und der Wasserstoff abgeführt werden, wird die Menge an Wasser geringer und es kann daher - um einen kontinuierlichen Betrieb aufrechtzuerhalten - als Strom a von extern neues Wasser (sog. Make-Up-Wasser) zugeführt werden.

Dieses Wasser a kann zuvor z.B. noch aufbereitet werden, was für die vorliegende Erfindung jedoch nicht weiter relevant ist. Ebenso kann ggf. im Wasserstoff-Abscheider 130 abgeschiedenes Wasser wieder in den Behälter 120, ggf. ebenfalls nach vorheriger Aufbereitung, geführt werden.

Wie erwähnt, wird im Behälter 120 Gas, insbesondere Sauerstoff (und ggf. noch vorhandener Wasserstoff), vom Wasser abgetrennt; das hierbei abgetrennte bzw. abgeschiedene Gas sowie kann als sauerstoffhaltiger Fluidstrom g z.B. für eine weitere Verwendung abgeführt und ggf. gespeichert werden. Wie erwähnt, kann der sauerstoffhaltige Fluidstrom g dabei nicht nur Sauerstoff sondern auch Wasserstoff aufweisen.

Von dem sauerstoffhaltigen Fluidstrom g kann ein (weiterer) sauerstoffhaltiger Fluidstrom h abgetrennt werden, der dann in einem Rezirkulationskreis später wieder dem Sauerstoffbereich der Elektrolyseanlage zugeführt werden soll. Denkbar ist auch, dass der gesamte sauerstoffhaltige Fluidstrom g dem Rezirkulationskreis zugeführt wird.

In dem Rezirkulationskreis ist beispielhaft ein Gebläse 142 vorgesehen, mittels dessen der sauerstoffhaltige Fluidstrom g angesaugt und dann weiter zum Sauerstoffbereich der Elektrolyseanlage, geblasen wird. Beispielhaft wird der sauerstoffhaltige Fluidstrom g nach dem Gebläse mit d bezeichnet, zudem durch einen Rekombinationsreaktor 144 geführt und dann beispielhaft in den prozessierten Fluidstrom c eingebracht, z.B. in der gezeigten Fluidverbindung 126, an einer Stelle, wo Fluidströme aus einzelnen Elektrolysezellen bereits vereinigt sind.

Der Rekombinationsreaktor 144 kann z.B., in Richtung des Fluidstroms, den eigentlichen Rekombinator, einen Nachkühler sowie einen Filter aufweisen. Etwaiges Kondensator kann vom Nachkühler z.B. abgeführt werden.

Vor dem Gebläse 142, d.h. stromaufwärts, ist eine Zuführstelle 140 vorgesehen, an der bei Bedarf Umgebungsluft k in den sauerstoffhaltigen Fluidstrom eingebracht bzw. diesem zugeführt werden kann. Hierzu ist beispielhaft ein Ventil 146 vorgesehen, das bei Bedarf geöffnet werden kann, um die Umgebungsluft einströmen zu lassen. Damit kann der sauerstoffhaltige Fluidstrom h mit Frischluft bzw. Umgebungsluft verdünnt werden. Weiterhin kann, vor der Zuführstelle 140 ein Ventil Zuführstelle 164 vorgesehen sein, mit dem der sauerstoffhaltige Fluidstrom h unterbrochen wird. Damit kann der sauerstoffhaltige Fluidstrom h sogar durch Frischluft bzw. Umgebungsluft ersetzt werden, d.h. der Strom d ist dann ein Umgebungsluftstrom, der dem Sauerstoffbereich der Elektrolyseanlage 100 zugeführt wird. Bei dem Umgebungsluftstrom handelt es sich dann naturgemäß immer noch um einen sauerstoffhaltige Fluidstrom, jedoch ohne den Wasserstoffanteil.

Weiterhin kann, nach dem Gebläse 142 und vor dem Rekombinationsreaktor 144, ein Teil m des sauerstoffhaltigen Fluidstroms d, zur anderweitigen Verwendung abgeführt werden. Dazu ist beispielhaft ein Ventil 148 vorgesehen (oder eine andere Schaltarmatur). Damit kann eine Nutzung des Nebenproduktes der Elektrolyse, nämlich Sauerstoff, ohne Verschleppung der Explosionsrisiken in nachfolgende Systeme, eine Sauerstoff-Verdichtung oder Sauerstoff-Reinigung ermöglicht werden.

Außerdem weist die Elektrolyseanlage 100 beispielhaft eine Steuereinheit 160 auf, mittels welcher z.B. die Elektrolyseeinheit 110 und/oder die Energieversorgungseinheit 118 angesteuert werden und ggf. auch überwacht werden können.

Die Steuereinheit 160 kann zudem beispielsweise als Überwachungseinrichtung dienen, um eine Wasserstoff-Konzentration im sauerstoffhaltigen Fluidstrom zu überwachen. Hierzu kann die Elektrolyseanlage 100 z.B. einen geeigneter Sensor 162 oder anderer Detektor aufweisen, mittels dessen die Wasserstoff-Konzentration im sauerstoffhaltigen Fluidstrom h, z.B. nach der Zuführstelle 140 und vor der Zufuhr zum Sauerstoffbereich Elektrolyseanlage, ermittelt oder gemessen werden kann. Die Steuereinheit 160 bzw. die Überwachungseinrichtung kann dann z.B. Messignale des Sensors erfassen und auswerten.

Wenn die Wasserstoff-Konzentration einen vorgegebenen Schwellwert, z.B. 2 Vol %, übersteigt, können verschiedene Sicherheitsmaßnahme eingeleitet werden. Es kann die Elektrolyseeinheit abgeschaltet werden, z.B. indem von der Steuereinheit 160 die Energieversorgungseinheit 118 entsprechend angesteuert wird. Zudem kann die Zufuhr der Umgebungsluft k in den sauerstoffhaltigen Fluidstrom h erfolgen, z.B. indem ein Ventil 146 zum Öffnen angesteuert wird. Es kann auch der sauerstoffhaltige Fluidstrom vor der Zuführstelle unterbrochen und durch die Umgebungsluft ersetzt werden, z.B. indem das Ventil 164 zum Schließen angesteuert und das Ventil 146 zum Öffnen angesteuert wird. Dies umfasst dann auch die Zufuhr der Frischluft. Die Steuereinheit 160 bzw. die Überwachungseinrichtung können z.B. entsprechend zum Ansteuern der Ventile eingerichtet sein.

Je nach Bedarf kann z.B. eine gewünschte Verdünnung des sauerstoffhaltigen Fluidstroms durch Umgebungsluft bis hin zum vollständigen Ersatz erfolgen; z.B. kann ein Anteil von wenigstens 50% oder wenigstens 80% oder wenigstens 90°% an Umgebungsluft verwendet werden. Es kann aber auch vorgesehen sein, dass standardmäßig der sauerstoffhaltige Fluidstrom immer durch Umgebungsluft ersetzt wird.

## Patentansprüche

1. Verfahren zum Betreiben einer Elektrolyseanlage (100), in der Wasser in einer Elektrolyseeinheit (110) in Sauerstoff und Wasserstoff umgesetzt wird,
wobei ein prozessierter Fluidstrom (c) von einer Sauerstoffseite (114) der Elektrolyseeinheit zu einem Gas-Abscheider (120) geführt wird, wobei der prozessierte Fluidstrom (c) Wasser und Gas aufweist,
wobei ein sauerstoffhaltiger Fluidstrom (g, h) von dem Gas-Abscheider (120) abgeführt wird, wobei der sauerstoffhaltiger Fluidstrom Gas aufweist,
wobei der sauerstoffhaltige Fluidstrom (h, d) einem Sauerstoffbereich der Elektrolyseanlage (100) zugeführt wird, und
wobei, bei Bedarf, dem sauerstoffhaltigen Fluidstrom (h) an einer Zuführstelle (140) vor der Zufuhr zum Sauerstoffbereich der Elektrolyseanlage (100) Umgebungsluft (k) zugeführt wird oder der sauerstoffhaltige Fluidstrom (h) vor der Zufuhr zum Sauerstoffbereich der Elektrolyseanlage (100) durch Umgebungsluft (k) ersetzt wird.

2. Verfahren nach Anspruch 1, wobei der sauerstoffhaltige Fluidstrom (d), nach der Zuführstelle (140) und bevor er dem Sauerstoffbereich der Elektrolyseanlage (100) zugeführt wird, durch einen Rekombinationsreaktor (144) geführt wird.

3. Verfahren nach Anspruch 1 oder 2, wobei ein Teil (m) des sauerstoffhaltigen Fluidstroms (d), nach der Zuführstelle (140) bevor er dem Sauerstoffbereich der Elektrolyseanlage (100) zugeführt wird, zur anderweitigen Verwendung abgeführt wird.

4. Verfahren nach einem der vorstehenden Ansprüche, wobei eine Wasserstoff-Konzentration im sauerstoffhaltigen Fluidstrom (h), insbesondere nach der Zuführstelle (140) und vor der Zufuhr zum Sauerstoffbereich Elektrolyseanlage (100), überwacht wird, und,
wobei, wenn die Wasserstoff-Konzentration einen vorgegebenen Schwellwert, insbesondere 2 Vol %, übersteigt, wenigstens eine Sicherheitsmaßnahme eingeleitet wird.

5. Verfahren nach Anspruch 4, wobei die wenigstens eine Sicherheitsmaßnahme wenigstens eine der folgenden Sicherheitsmaßnahmen umfasst:
- Abschalten der Elektrolyseeinheit (110),
- Zufuhr der Umgebungsluft (k) in den sauerstoffhaltigen Fluidstrom (h),
- Unterbrechen des sauerstoffhaltigen Fluidstroms (h) vor der Zuführstelle (140) und Ersetzen des sauerstoffhaltigen Fluidstroms (h) durch die Umgebugnsluft (k).

6. Verfahren nach einem der vorstehenden Ansprüche, wobei die Elektrolyseanlage zur Protonen-Austausch-Membran-Elektrolyse eingerichtet ist.

7. Verfahren einem der vorstehenden Ansprüche, wobei der sauerstoffhaltige Fluidstrom (h, d) dem Sauerstoffbereich der Elektrolyseanlage (100) zugeführt wird, indem der sauerstoffhaltige Fluidstrom (h, d) dem prozessierten Fluidstrom (c) und/oder dem Gas-Abscheider (120) zugeführt wird

8. Elektrolyseanlage (100) mit einer Elektrolyseeinheit (110), in der Wasser in Sauerstoff und Wasserstoff umsetzbar ist, und mit einem Gas-Abscheider (120),
wobei die Elektrolyseanlage (100) eingerichtet ist, von einer Sauerstoffseite (114) der Elektrolyseeinheit zu dem Gas-Abscheider (120) einen prozessierten Fluidstrom (c) zu erzeugen, wobei der prozessierte Fluidstrom Wasser und Gas aufweist,
wobei die Elektrolyseanlage (100) eingerichtet ist, einen sauerstoffhaltigen Fluidstrom (g, h) von dem Gas-Abscheider (120) abzuführen und einem Sauerstoffbereich der Elektrolyseanlage (100), insbesondere dem prozessierten Fluidstrom (c) und/oder dem Gas-Abscheider (120), zuzuführen, wobei der sauerstoffhaltige Fluidstrom Gas aufweist, und
wobei die Elektrolyseanlage (100) eingerichtet ist, bei Bedarf, dem sauerstoffhaltigen Fluidstrom (h) an einer Zuführstelle (140) vor der Zufuhr zum Sauerstoffbereich der Elektrolyseanlage (100) Umgebungsluft (k) zuzuführen oder den sauerstoffhaltige Fluidstrom (h) vor der Zufuhr zum Sauerstoffbereich der Elektrolyseanlage (100) durch Umgebungsluft (k) zu ersetzen.

9. Elektrolyseanlage (100) nach Anspruch 8, weiterhin mit einem Gebläse (142), wobei die Elektrolyseanlage (100) eingerichtet ist, den sauerstoffhaltigen Fluidstrom (g, h) mittels des Gebläses dem Sauerstoffbereich der Elektrolyseanlage (100) zuzuführen .

10. Elektrolyseanlage (100) nach Anspruch 8 oder 9, weiterhin mit einem Rekombinationsreaktor (144) , wobei die Elektrolyseanlage (100) eingerichtet ist, den sauerstoffhaltigen Fluidstrom (g, h,) bevor er dem Sauerstoffbereich der Elektrolyseanlage (100) zugeführt wird, durch den Rekombinationsreaktor zu führen.

11. Elektrolyseanlage (100) nach einem der Ansprüche 8 bis 10, weiterhin mit einer Überwachungseinrichtung (160), die eingerichtet ist, eine Wasserstoff-Konzentration im sauerstoffhaltigen Fluidstrom (h), insbesondere nach der Zuführstelle (140) und vor der Zufuhr zum Sauerstoffbereich Elektrolyseanlage (100), zu überwachen, und, wenn die Wasserstoff-Konzentration einen vorgegebenen Schwellwert, insbesondere 2 Vol %, übersteigt, wenigstens eine Sicherheitsmaßnahme einzuleiten.

12. Elektrolyseanlage (100) nach Anspruch 11, wobei die wenigstens eine Sicherheitsmaßnahme wenigstens eine der folgenden Sicherheitsmaßnahmen umfasst:
- Abschalten der Elektrolyseeinheit (110),
- Zufuhr der Umgebungsluft (k) in den sauerstoffhaltigen Fluidstrom (h), insbesondere durch Öffnen eines Ventils (146) der Elektrolyseanlage,
- Unterbrechen des prozessierten Fluidstroms (c) von der Sauerstoffseite (114) der Elektrolyseeinheit zu dem Gas-Abscheider (120) und Ersetzen des sauerstoffhaltigen Fluidstroms (h) durch die Umgebugnsluft (k).

13. Elektrolyseanlage (100) nach einem der Ansprüche 8 bis 12, die zur Protonen-Austausch-Membran-Elektrolyse eingerichtet ist.

14. Elektrolyseanlage (100) nach einem der Ansprüche 8 bis 13, die eingerichtet ist, ein Verfahren nach einem der Ansprüche 1 bis 7 durchzuführen.
